Europäisches Patentamt

European Patent Office

Office européen des brevets

(19)

(11) Veröffentlichungsnummer : **0 155 484**
**B1**

(12) **EUROPÄISCHE PATENTSCHRIFT**

(45) Veröffentlichungstag der Patentschrift :
20.01.88

(21) Anmeldenummer : 85101266.6

(22) Anmeldetag : 07.02.85

(51) Int. Cl.⁴ : **F 16 B 13/00**

(54) **Spreizdübel.**

(30) Priorität : 20.02.84 DE 3406077

(43) Veröffentlichungstag der Anmeldung :
25.09.85 Patentblatt 85/39

(45) Bekanntmachung des Hinweises auf die Patenterteilung : 20.01.88 Patentblatt 88/03

(84) Benannte Vertragsstaaten :
AT BE CH DE FR GB IT LI LU NL SE

(56) Entgegenhaltungen :
CH-A-   2 517
CH-A-   311 726
CH-A-   635 172
DE-A- 2 513 969
DE-A- 2 908 535
DE-A- 3 208 266
DE-B- 2 024 935
DE-U- 1 860 318
DE-U- 1 917 031
FR-A-   946 310
GB-A- 1 492 008

(73) Patentinhaber : **Knoche, Alfons**
**Overbergstrasse 7**
**D-5758 Fröndenberg (DE)**

(72) Erfinder : **Knoche, Alfons**
**Overbergstrasse 7**
**D-5758 Fröndenberg (DE)**

(74) Vertreter : **Graf, Walter, Dipl.-Ing.**
**Sckellstrasse 1**
**D-8000 München 80 (DE)**

EP 0 155 484 B1

## Beschreibung

Die Erfindung betrifft einen Spreizdübel laut Oberbegriff des Hauptanspruches.

Ein Spreizdübel dieser Art zum Befestigen beispielsweise eines Kunststoff-Fensterrahmens an einer Gebäudewand ist bekannt (DE-A-32 08 266). Durch das bei diesem Spreizdübel vorgesehene Umbördeln des Hülsenhalses wird zwar das Einziehen des Schraubenkopfes in die Montagebohrung und damit weitgehendst auch ein Durchrutschen des Dübels durch die Montagebohrung des zu befestigenden Bauteils verhindert, allerdings erst nach dem festen Anziehen der Schraube.

Um das Durchrutschen und Durchdrehen eines Spreizdübels ähnlicher Art schon beim Einsetzen des Dübels in die Montagebohrung zu verhindern ist es bekannt, am oberen Rand der Blechhülse radial nach außen Blechlappen senkrecht zur Dübelachse abzubiegen und an diesen Lappen außerdem nach unten abstehende dreieckförmige Vorsprünge vorzusehen, die beim Anziehen der Schraube in die Oberfläche des zu befestigenden Bauteils eingedrückt werden (CH-A-635 172). Diese bekannte Durchrutsch- und Drehsicherung besitzt den Nachteil, daß die nach außen abgebogenen Lappen flach auf der Oberfläche des zu befestigenden Bauteils aufliegen und außerdem nicht von dem Schraubenkopf abgedeckt sind, diese Art von Durchrutsch- und Drehsicherung wäre daher für einen Spreizdübel der eingangs erwähnten·Art, bei dem es auch auf ein dekoratives Aussehen der Befestigungsstelle auf der Oberfläche eines zu befestigenden Kunststoff-Fensterrahmens ankommt, nicht geeignet.

Es ist Aufgabe der Erfindung, eine wirksame Durchrutsch- und Drehsicherung für einen Spreizdübel der eingangs erwähnten Art zu schaffen, die ein dekoratives Aussehen in der fertigen Montagestellung und trotzdem einen guten Sitz der Blechhülse im zu befestigenden Bauteil gewährleistet. Ferner ist es Aufgabe einer Ausgestaltung der Erfindung, einen solchen Spreizdübel zusätzlich noch so weiterzubilden und zu verbessern, daß auch ein verbesserter Sitz der Blechhülse im Baukörper gewährleistet ist und die Blechhülse auch einfach und doch maßgenau gefertigt werden kann.

Die der Erfindung zugrunde liegende Hauptaufgabe wird ausgehend von einem Spreizdübel laut Oberbegriff des Hauptanspruches durch dessen kennzeichnende Merkmale gelöst. Vorteilhafte Weiterbildungen insbesondere zur Lösung der erwähnten zusätzlichen Aufgabe ergeben sich aus den Unteransprüchen.

Durch die erfindungsgemäß ausgebildeten radial abstehenden Krallen wird verhindert, daß der Dübel durch die Bohrung des zu befestigenden Bauteils durchrutscht, die Krallen verkrallen sich vielmehr schon beim Einsetzen des Dübels im Material des Bauteils und es wird dadurch auch verhindert, daß sich der Dübel beim Festschrauben mitdreht. Trotzdem wird in der endgültigen Montagestellung bei fest angezogener Schraube ein sehr dekoratives Aussehen auf der Oberseite des Bauteils erzielt, da die Krallen durch den sie vollständig überdeckenden Schraubenkopf ganz im Material des zu befestigenden Bauteils versenkt werden, also in der endgültigen Montagestellung nichts vom Dübel über die Oberseite des Bauteils übersteht, sondern nur noch der Schraubenkopf, der gemäß einer Weiterbildung der Erfindung nach Art einer ansprechenden Rosette geformt sein kann. Da der Schraubenkopf die radial nach außen abstehenden Krallen voll abdeckt ist von diesen Krallen und den Versenkstellen der Krallen im Material nach oben nichts mehr sichtbar, es wird eine sehr saubere Befestigungsstelle erreicht und es sind auch keine Materialverformungen sichtbar.

Damit beim Einschlagen des Dübels der Hülsenrand nicht zusammengedrückt wird und die Krallen von Anfang an voll wirksam werden können, ist es vorteilhaft, gemäß einer Weiterbildung der Erfindung die am Hülsenrand vorgesehenen Schlitze mit entsprechenden Stegen zu schließen. Dadurch ist gewährleistet, daß die Krallen fest im Material des zu befestigenden Bauteils eingedrückt werden. Durch das funktionelle Zusammenwirken der Krallen mit den zusätzlichen Rastvorsprüngen eignet sich ein erfindungsgemäßer Spreizdübel vor allem für die Abstandmontage eines Bauteils, denn das Material des Bauteils wird durch die Krallen sehr fest am Dübel verankert.

Ferner hat es sich als vorteilhaft erwiesen, die im Abstand der Dicke des zu befestigenden Bauteils unterhalb des Hülsenrandes vorgesehenen Rastvorsprünge, die in bekannter Weise als taschenförmige Ausprägungen in der Hülsenwand ausgebildet sein können, als schräge und aussen treppenförmig gerillte Ausprägungen auszubilden, durch deren äussere Profilierung der Dübel noch fester in dem zu befestigenden Bauteil eingeklemmt werden kann. Vorzugsweise sind dazwischen noch zusätzliche entgegengesetzt schräg gestellte ebenfalls aussen treppenförmig gestaltete Ausprägungen vorgesehen.

Bei der Massenproduktion der aus Stahlblech gebogenen Blechhülsen für Spreizdübel dieser Art ist es wichtig, die Hülse beim Wickeln aus einem flachen Blechteil in einem Folgewerkzeug möglichst exakt zylindrisch herzustellen, damit das Bohrloch mit möglichst geringem Übermass hergestellt werden muss. Bei den bisher üblichen Blechhülsen ist dies nur schwer erreichbar. Die Bohrlöcher beispielsweise für einen 10 mm-Dübel (Aussendurchmesser) mussten deshalb mit einem Übermass von beispielsweise 10,5 mm gesetzt werden. Mit den erfindungsgemässen Krallen wird zwar auch noch bei solchen Übermassen der Bohrung gewährleistet, dass der Dübel nicht durch das Bohrloch im Bauteil durchrutscht und der Dübel beim Anziehen der Schraube sich auch nicht mitdreht. Gemäss einer Weiterbildung der Erfindung hat es sich jedoch als vorteilhaft erwiesen, im Sinne des Unteranspruchs 12 die untere Spreizzone so zu gestalten, dass die Hülse auch aus relativ dicken Blechzuschnitten in einem Folgewerkzeug mit gleichmässiger Toleranz stets exakt zylindrisch hergestellt werden kann. Dies wird dadurch erreicht, dass mindestens ein Teil der nach unten abstehenden Mantellappen am unteren Rand durch Stege miteinander verbunden werden, also der ungebogene Blechzuschnitt auch in diesem unteren Bereich zusammenhängend ist. In dem Folgewerkzeug kann also auch dieser untere Teil der Hülse wesentlich exakter zu einem Zylinder gebogen werden als dies mit frei abstehenden Mantellappen der Fall ist. Die Aufteilung der Breite der unteren Mantelschlitze und deren Verbindung durch Stege wird nach diesen verbesserten Herstellungsmöglichkeiten gewählt, je mehr dieser untere Teil der Hülse am Rand geschlossen ist, umso genauer zylindrisch kann die Hülse hergestellt werden. Andererseits darf durch diese zusätzlichen Stege nicht die Spreizeigenschaft der unteren Spreizzone allzu stark eingeschränkt werden. Der Steg könnte gegebenenfalls als Sollbruchstelle ausgebildet sein und nach dem Anziehen der Spannschraube aufreissen. Nachdem dieser Steg aber gemäss einer Weiterbildung der Erfindung gleichzeitig auch als Verlierungssicherung für die Spreizmutter dient, ist es vorteilhaft, die Bemessung dieses Steges an den unteren Mantellappen so zu wählen, dass dieser nicht aufreisst. Dies ist möglich, wenn der verbleibende freie Lappen ein Drittel des Gesamtumfanges der Hülse einnimmt und die durch den Steg miteinander verbundenen Lappen die restlichen zwei Drittel des Umfangs. Bei dieser Aufteilung kann der Steg bleiben und es wird trotzdem ein sicherer und zentrischer Sitz des Dübels im Bohrloch gewährleistet.

Diese durch die Ausbildung der unteren Spreizzone mögliche genaue Herstellung des Dübels macht es möglich, dass das Bohrloch ohne allzu grosses Übermass gebohrt wird. Damit ist auch ein wesentlich festerer Sitz eines solchen Dübels im Bauteil und im Mauerwerk gewährleistet. Die Ausbildung der unteren Spreizzone ist besonders vorteilhaft in Kombination mit den am oberen Rand der Blechhülse vorgesehenen Krallen, da durch das funktionelle Zusammenwirken dieser beiden Massnahmen erstmals ein Dübel geschaffen wird, der einen sehr guten und festen Sitz gewährleistet, wodurch es vor allem auch möglich ist, die neuerdings geforderten hohen Ansprüche an die Befestigung von Kunststoff-Fensterrahmen zwecks Verbesserung der Wärmedämmeigenschaften optimal zu erfüllen. Beim Einsetzen des erfindungsgemässen Dübels ist kein Anecken des Dübels an der Montagebohrung zu befürchten, wie dies bei den bisher bekannten und nicht so exakt herstellbaren Blechdübelkonstruktionen mit abstehenden Schlitzrändern der Fall ist und ein erfindungsgemässer Dübel kann deshalb auch wesentlich einfacher und genauer eingesetzt werden.

Die durch diese zusätzlichen Stege gebildete Möglichkeit für den Verlierungsschutz der Spreizmutter bietet den zusätzlichen Vorteil, dass die sich an diesem Steg abstützende Verlierungssicherungsnase der Spreizmutter anfänglich den oberen Hülsenrand vom Druck des Schraubenkopfes entlastet und der Schraubenkopf daher mit Sicherheit die Hülsenöffnung anfänglich nicht aufweiten kann. Damit wird eine zusätzliche Einschlagsicherung für den Dübel erreicht.

Die Mantellappen der unteren Spreizzone sind vorzugsweise unterschiedlich lang ausgebildet und an der Spreizmutter sind vorzugsweise entsprechend zugehörige Nockenabschnitte ausgebildet, die so geformt sind, dass beim Anziehen der Schraube die unterschiedlich langen Lappen gleichmässig aufgeweitet werden. Der nicht durch einen Steg mit den anderen Lappen verbundene Mantellappen wird dabei relativ schnell nach aussen abgebogen werden und so schon am Anfang den Dübel fest im Bohrloch verankern. Damit wird sehr schnell eine Verdrehungssicherung des Dübels im Bohrloch erreicht. Die zusätzlichen Nocken auf der Aussenseite der Spreizmutter dienen ausserdem noch zum Zentrieren der Mutter bezüglich der Hülse, die im unteren Bereich ja unterschiedlich lang vorstehende Lappen aufweist. Damit wird ein stets mittiges Einsetzen des Dübels im Bohrloch gewährleistet.

Gemäss der Erfindung wird erstmals ein Spreizdübel mit einer aus einem Blechteil geformten Blechhülse geschaffen, der einen festen Sitz des Dübels im Bauwerk und in dem zu befestigenden Bauteil gewährleistet und der es erstmals ermöglicht, für einen 10 mm-Dübel auch ein 10 mm-Bohrloch vorzusehen. Dieses erstmals mögliche engere Bohrloch ermöglicht optimale Haltewerte und trotzdem kann ein erfindungsgemässer Dübel sehr einfach und billig auch in Massenproduktion aus entsprechend vorgestanzten Blechteilen in einem Folgewerkzeug hergestellt werden.

Ein erfindungsgemässer Spreizdübel ermöglicht erstmals auch eine sogenannte Blindmontage eines Kunststoff-Fensterrahmens an einem Mauerwerk, d. h. der Dübel kann durch ein entsprechendes Loch im Profil eines Kunststoff-Fensterrahmens so in die Profilkammer des Fensterrahmens eingesetzt werden, dass der Schraubenkopf an der von aussen nicht sichtbaren Profilfläche anliegt. Dies ist erstmals mit einem erfindungsgemässen Spreizkopfdübel möglich, da nur dieser einen bereits beim Einstecken sicheren Sitz des Dübels im Mauerwerk sicherstellt und mit Sicherheit auch verhindert, dass der Dübel durch das Bohrloch im zu befestigenden Profilrahmen durchrutscht bzw. beim Anziehen sich mitdreht. Erst dadurch ist eine solche Blindmontage möglich, bei der ja der Sitz des Dübelkopfes vom Benutzer nicht mehr beim Einschrauben beobachtet werden kann. Diese erstmals mit einem erfindungsgemässen Dübel mögliche Blindmontage eines Fensterrahmens gewährleistet auch einen wesentlich besseren Sitz und erfüllt so wesentlich besser die inzwischen geforderten Wärmedämmeigenschaften, da der Dübelkopf nicht mehr wie bisher am äusseren Kunststoffprofil des Rahmens angreift sondern so gesetzt werden kann, dass er in dem im Rahmeninneren vorgesehenen Blechprofil des Fensterrahmens angreift und dort einen besseren Flächendruck ermöglicht. Ausserdem ist bei dieser möglichen Montageart nach aussen nur noch ein Bohrloch im Profilrahmen sichtbar, das durch einen geeigneten Stopfen verschlossen werden kann.

Die Erfindung wird im folgenden anhand schematischer Zeichnungen an Ausführungsbeispielen näher erläutert.

Fig. 1 zeigt die Seitenansicht eines erfindungsgemässen Spreizdübels ;

Fig. 2 zeigt das zugehörige Schnittbild längs der Linie A-B ;

Fig. 3 zeigt die Abwicklung des Blechteiles, aus dem die in Fig. 1 dargestellte Blechhülse gebogen ist, in Zuordnung zu den ebenfalls in Abwicklung dargestellten Nocken der Spreizmutter ;

Fig. 4 zeigt den zugehörigen Schnitt längs der Linie A-B nach Fig. 3 ;

Fig. 5 zeigt in einem Schnittbild das anfängliche Aufweiten der unteren Spreizzone und eine besondere Kopfform ;

Fig. 6-8 zeigen weitere Möglichkeiten für die Ausbildung der Rastvorsprünge an der Blechhülse ;

Fig. 9 zeigt die Anwendung eines erfindungsgemässen Spreizdübels zur Blindmontage eines Fensterrahmenprofils ;

Fig. 10 und 11 zeigen eine zugehörige Abdeckkappe.

Ein erfindungsgemässer Spreizdübel zum Befestigen eines Kunststoff-Fensterrahmens 1 an einem Mauerwerk 2 besteht aus einer Blechhülse 3 aus Stahlblech und einem Schraubenbolzen 4, der mit seinem Kopf 5 sich am oberen Rand der Hülse 3 abstützt und dessen auf dem Gewindeende 6 aufgeschraubte Spreizmutter 7 mit der unteren Spreizzone 8 der Hülse 3 zusammenwirkt. Der obere Rand der Hülse 3 und der zugehörige Kopf 5 des Schraubbolzens 4 ist vorzugsweise gemäss DE-A-32 08 266 ausgeführt.

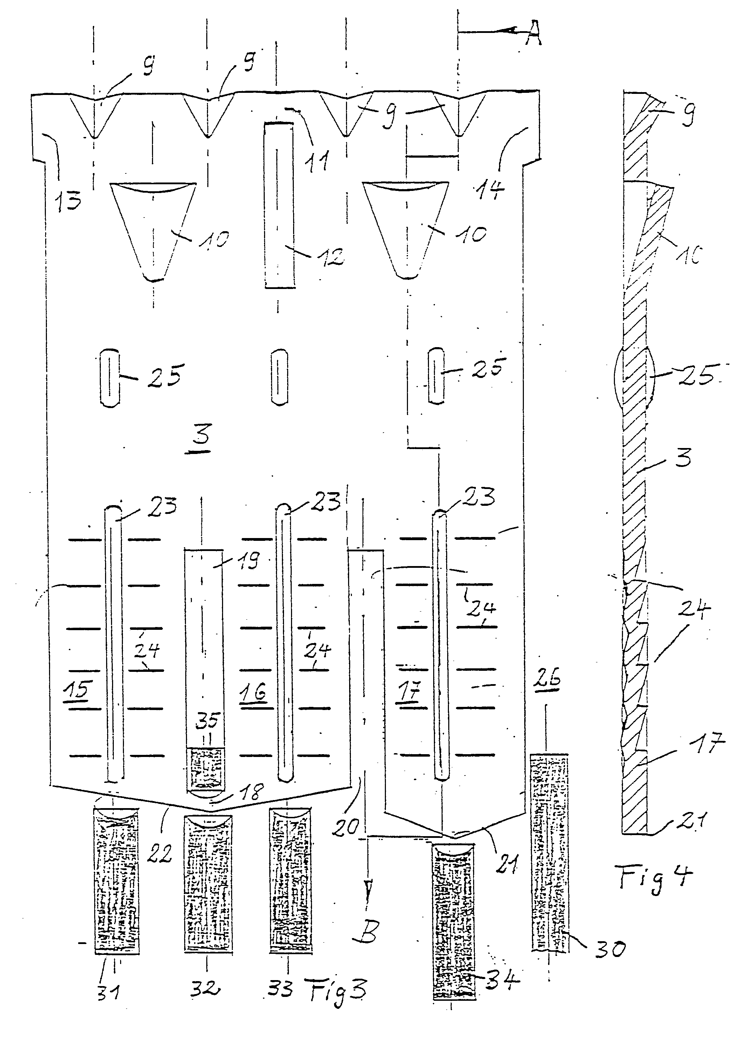

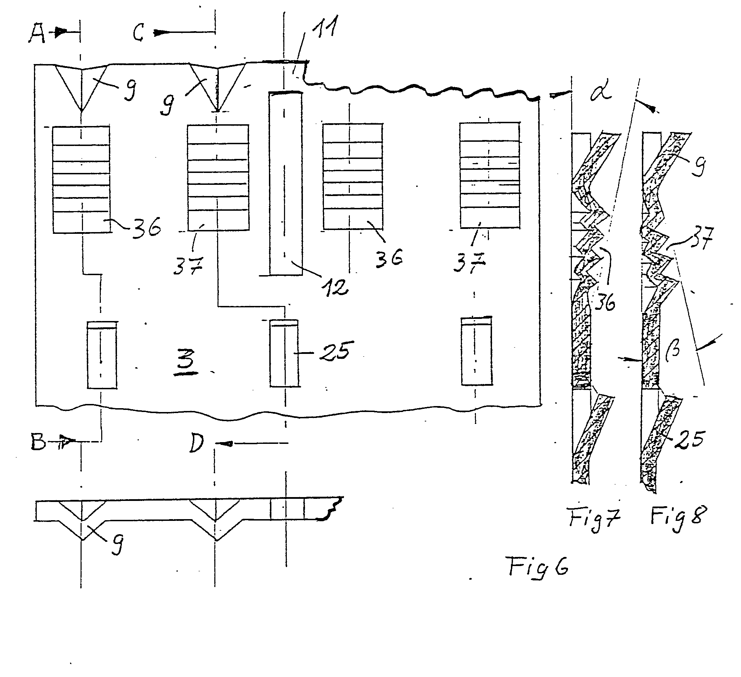

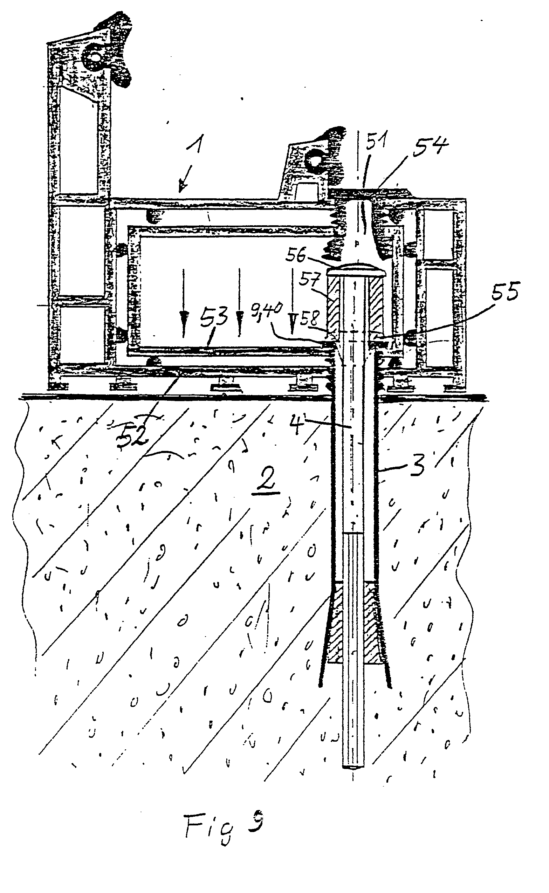

Die Hülse 3 ist aus einem in Fig. 3 dargestellten flachen Blechzuschnitt in einem Folgewerkzeug gebogen. Am oberen Rand des Blechzuschnittes sind dreieckförmige Sicken 9 ausgeprägt, darunter etwa im Abstand der Materialdicke des Fensterrahmens 1 zusätzliche Rastvorsprünge 10. Zwischen den Rastvorsprüngen 10 ist ein oben am Rand durch einen Steg 11 geschlossener Schlitz 12 ausgestanzt. Seitlich am oberen Rand sind zwei schmale Lappen 13 und 14 vorgesehen. Die untere Spreizzone wird durch drei Mantellappen 15, 16 und 17 gebildet, wobei die beiden Lappen 15 und 16 durch einen unten über einen Steg 18 geschlossenen Schlitz 19 voneinander getrennt sind und die Lappen 16 und 17 durch einen unten offenen Schlitz 20. Der Lappen 17 ist axial etwas länger gewählt als die beiden Lappen 15 und 16. Der untere Rand 21 des Mantellappens 17 ist pfeilförmig zugeschnitten, ebenso das untere Ende 22 des durch die beiden miteinander verbundenen Lappen 15 und 16 gebildeten Mantelabschnittes. Die Länge des Schlitzes 19 ist vorzugsweise etwas grösser gewählt als die des Schlitzes 20. Auf den Lappen 15, 16 und 17 sind jeweils Verdrehungssicherungen ausgeformt, und zwar in Form von Längssicken 23 und quer dazu verlaufenden Quersicken 24. In dem Bereich zwischen den Rastvorsprüngen 10 und der unteren Spreizzone 8 sind vorzugsweise noch zusätzliche Verdrehungssicherungen 25 in Form von entsprechenden Ausprägungen vorgesehen.

Beim Aufwickeln eines Blechzuschnittes nach Fig. 3 in einem geeigneten Folgewerkzeug entsteht eine zylindrische Hülse 3, bei der die beiden Lappen 13 und 14 aneinanderstossen und anschliessend einen durchgehenden Längsschlitz 26 bilden, der in der unteren Spreizzone 8 offen ist und nur oben durch die aneinanderstossenden Lappen 13 und 14 geschlossen ist. Die Ausprägungen 9 stehen radial nach aussen ab und bilden Krallen, die sich beim Einsetzen des Dübels fest in das Material des zu befestigenden Bauteils 1 eingraben. Die in gleicher Richtung nach aussen ausgeprägten Rastvorsprünge 10 bilden die Auflage für die Unterseite des Bauteils 1. Da die Lappen 15 und 16 durch den Steg 18 miteinander verbunden sind, kann auch in dem unteren Bereich der Spreizzone die Hülse in dem Folgewerkzeug exakt zylindrisch geformt werden. Es sind nur zwei abstehende Lappen vorgesehen, wodurch das exakt zylindrische Herstellen der Hülse wesentlich leichter möglich ist als dies mit drei oder mehr abstehenden einzelnen Lappen der Fall ist.

Am Umfang der Spreizmutter 7 sind zusätzlich zu dem Führungssteg 30, der in dem durchgehenden Längsschlitz der Hülse geführt ist, Nocken 31 bis 34 ausgebildet, und zwar sind diese im Sinne der Fig. 3 so am Umfang der konischen Spreizmutter verteilt, dass die Nocken 31 und 33 den beiden Mantellappen 15 und 16 etwa in der Mitte zugeordnet sind, der Nocken 32 dem Steg 18 und der Nocken 34 dem einzelnen Mantellappen 17. Das Profil dieser Nocken 31 bis 34 und deren Höhe und Lage auf der Mantelfläche der Spreizmutter 7 ist so gewählt, dass beim Anziehen der Schraube und damit Einziehen der Spreizmutter 7 die zugehörigen Mantellappen 15, 16, 17 gleichmässig aufgespreizt werden. Die Nocken 31 bis 34 wirken gleichzeitig als Zentrierung für die Mutter in der Hülse, die ja am unteren Rand nicht gerade ist.

Oberhalb des Nockens 32 ist noch eine Nase 35 am Umfang der konischen Spreizmutter 7 ausgebildet, die in den Schlitz 19 passt und als Verlierungssicherung für die Spreizmutter dient. Die Nase 35 kommt zur Anlage am Steg 18 und dadurch wird ein Herausfallen der Mutter 7 verhindert.

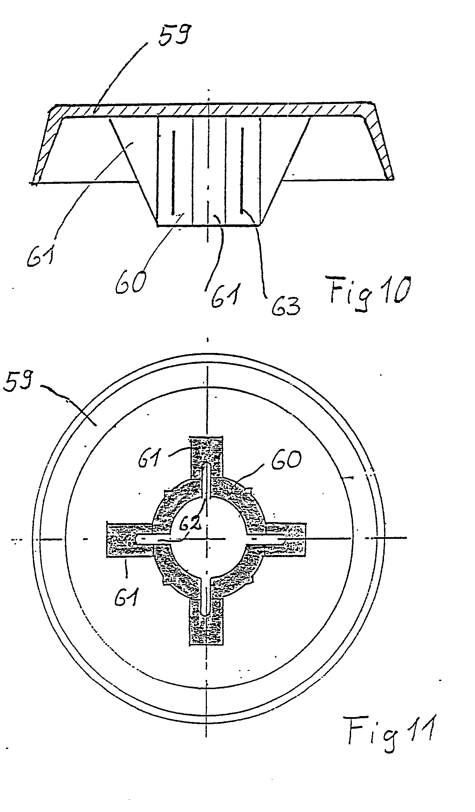

Fig. 5 zeigt das Einsetzen eines erfindungsgemässen Spreizdübels in eine entsprechende Mauerbohrung zum Befestigen eines Kunststofrahmens 1. Beim Einschlagen des Dübels mit dem Hammer in die Bohrung (die Rastvorsprünge 10 können wegen der Schlitze 12, 26 dabei radial nach innen federn) werden die Krallen 9 in das Material des Fensterrahmens 1 am Rand der Bohrung versenkt, der Dübel krallt sich also in dem Material 1 fest und wird so gegen Verdrehen gesichert. Die Blechhülse 3 kann hierbei noch einige Zehntelmillimeter über die Oberfläche des Bauteiles 1 vorstehen, kann jedoch nicht durch die Bohrung im Bauteil durchrutschen, da die Krallen radial nach aussen abstehen und zusätzlich noch dieses Durchrutschen verhindern. Wenn die Schraube mit einem Schraubendreher angezogen wird, wird durch die Spreizmutter 7 die untere Spreizzone 8 aufgespreizt, und zwar wird zunächst über den Nocken der längere Mantellappen 17, der ja mit den übrigen Mantellappen nicht verbunden ist und relativ schmal ausgebildet ist, anfänglich etwas stärker aufgespreizt und so der Dübel gegen Verdrehen im Mauerwerk gesichert. Verstärkt wird diese Verdrehungssicherung durch die Längs- und Quersicken 23, 24 und auch durch die zusätzlichen Ausprägungen 25. Beim weiteren Einziehen der Spreizmutter 7 werden dann schliesslich auch die etwas steiferen und miteinander über den Steg 18 verbundenen Mantellappen 15 und 16 aufgespreizt. Wenn somit die untere Spreizzone 8 fest im Mauerwerk verankert ist, wirkt auch der Schraubenkopf 5 auf den Rand der Hülse und versenkt den Hülsenrand im zu befestigenden Bauteil, wobei bei geeigneter Ausbildung der Unterseite des Schraubenkopfes die Hülse entsprechend am Rand aufgeweitet und so fest in der Bohrung des Bauteils verankert wird.

Fig. 6 zeigt in Draufsicht auf einen Blechzuschnitt eine andere Möglichkeit für die Ausformung der Rastvorsprünge 10, Fig. 7 und 8 zeigen die zugehörigen Schnittbilder. Nach dieser Weiterbildung bestehen die Rastvorsprünge, die nach dem Einsetzen des Dübels auf der Unterseite des zu befestigenden Bauteils zur Anlage kommen, aus Ausprägungen 36, die auf ihrer Aussenseite treppenförmig geformt sind und somit krallenförmige Längsrillen besitzen, wie dies das Schnittbild nach Fig. 7 zeigt. Diese Ausprägungen sind so gestaltet, dass sie eine unter dem Winkel $\alpha$ schräg geneigte Aussenfläche besitzen mit dem höchsten Punkt nach oben in Richtung auf den Hülsenrand. Diese aussen gezackte Ausbildung der Ausprägungen 36 gewährleistet einen noch besseren und festeren Sitz des Dübels in dem zu befestigenden Bauteil, da hiermit der Dübel auch noch an anderen Teilen des zu befestigenden Bauteils angreifen und sich dort verkeilen kann. Besonders vorteilhaft ist es hierbei, zwischen den als Rastvorsprünge wirkenden Ausprägungen 36 noch weitere Ausprägungen 37 vorzusehen, die im Sinne des Schnittbildes nach Fig. 8 umgekehrte Steigung (Winkel $\beta$) besitzen.

Die Anzahl der Krallen 9 und auch die Anzahl der zugehörigen Rastvorsprünge 10 bzw. Ausprägungen 36, 37 richtet sich nach dem jeweiligen Verwendungszweck des Dübels und dessen Durchmesser. Vorzugsweise sind zwei radial gegenüberliegende Rastvorsprünge 10 vorgesehen und beispielsweise symmetrisch dazu und demgegenüber winkelversetzt vier gleichmässig über den Umfang der Hülse verteilte Krallen 9, wie dies das Ausführungsbeispiel zeigt. Genauso gut können natürlich auch mehr oder weniger verteilte Krallen am Rand der Hülse vorgesehen sein. Die Krallen 9 stehen nur einige Millimeter über den Umfang der Hülse hinaus, sie sind etwa so hoch gewählt wie die Rastvorsprünge 10. Auch diese Höhe der Krallen 9 richtet sich nach dem jeweiligen Anwendungsfall. Da der erfindungsgemässe Dübel in ein Bohrloch von geringerem Übermass eingesetzt werden kann, was auf die spezielle Gestaltung der Spreizzone 8 zurückzuführen ist, brauchen die Krallen 9 keine allzu grosse radiale Höhe zu besitzen, um ihre Funktion zu erfüllen.

Fig. 9 zeigt die Möglichkeit einer Blindmontage eines Fensterrahmenprofiles 1 an einem Mauerwerk 2 mittels eines erfindungsgemässen Spreizdübels. In das Rahmenprofil wird zunächst eine Montageöffnung 51 gebohrt, die im Durchmesser etwas grösser als der Durchmesser des Schraubenkopfes gewählt ist. Anschliessend wird dann in das darunterliegende Profilmaterial bestehend aus dem Kunststoffrahmenteil 52 und dem als Versteifung meist eingesetzten Metallrahmenprofil 53 die eigentliche Montagebohrung bis ins Mauerwerk eingebracht. Dann wird ein erfindungsgemässer Spreizdübel eingesetzt, bei dem durch die Krallen 9 bzw. durch den Flansch 40 sichergestellt ist, dass er nicht durch die Montagebohrung in den Teilen 52, 53 durchrutscht sondern sogar noch zusätzlich durch diese Krallen gegen Verdrehen gesichert ist. Die zusätzlichen Ausprägungen 36, 37 können sich dabei wie gezeigt in dem Profilmaterial verkrallen und so zum guten Sitz des Dübels beitragen.

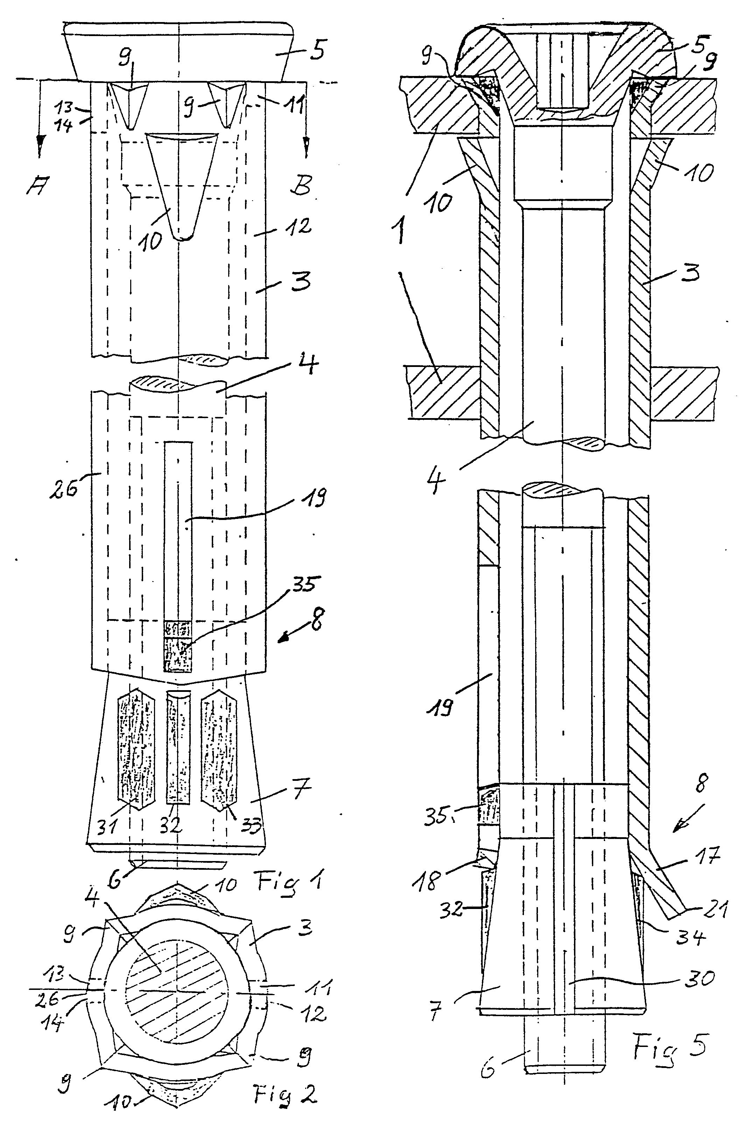

Bei Versendung eines Dübelsatzes nach Fig. 1 mit unmittelbar am Dübelrand aufliegenden Schraubenkopf kann es für den Monteur eines solchen Fensterrahmens je nach Tiefe des Profils unter Umständen schwierig sein, den Schraubendreher in die Kreuzschlitzvertiefung des Schraubenkopfes einzusetzen, wenn dieser relativ weit unterhalb der Montageöffnung 51 am unteren Teil 53 des Metallrahmenprofils aufliegt, wie dies in Fig. 9 bei 55 gestrichelt angedeutet ist. Für solche Fälle hat es sich als zweckmässig erwiesen, eine etwas längere Schraube 4 zu wählen und gemäss Fig. 9 zwischen Schraubenkopf 56 und dem oberen Rand der Blechhülse 3, an welchem die Krallen 9 bzw. der vorspringende Flansch 40 ausgebildet sind, eine Verlängerungshülse 57 vorzusehen, durch welche der Schraubenkopf 56 unmittelbar unterhalb der Montageöffnung 51 zu liegen kommt und somit leicht vom Monteur einsehbar ist und wodurch das Einführen des Schraubendrehers in den Kreuzschlitz des Schraubenkopfes sehr erleichtert wird. Die Verlängerungshülse 57 kann aus Blech sein, vorzugsweise besteht sie jedoch aus einem entsprechend festen Kunststoffmaterial. Sie kann gemäss Fig. 9 lose zwischen Kopf 56 und Rand 40 der Blechhülse 3 eingesetzt sein und beispielsweise nur durch einen vorspringenden Rand 58 in der Blechhülse 3 geführt sein, sie kann aber auch unmittelbar an der Blechhülse 3 befestigt sein, etwa dadurch, dass sie am unteren Ende mit einer inneren Ringnut versehen ist und einfach über die Krallen 9 bzw. den Flansch 40 am oberen Rand der Hülse 3 mit Schnappwirkung aufgestülpt ist. Diese Art der Befestigung der Kunststoffhülse am oberen Rand der Blechhülse 3 bringt den zusätzlichen Vorteil mit sich, dass der obere Rand der Blechhülse nicht unmittelbar auf dem Aluminiumprofil 53 aufliegt sondern zwischen dem Blechhülsenrand und dem Aluminiumprofil 53 eine Isolierung aus Kunststoff besteht, die eine Korrosion der Blechhülse verhindert.

Nach dem Festziehen des Schraubenbolzens und damit festem flächigen Andrücken des Metallprofils 53 am Mauerwerk, was wegen des Angreifens des Schraubenkopfes an diesem Metallteil mit wesentlich grösserem Flächendruck geschehen kann, wird die Montageöffnung 51 durch einen geeigneten Stopfen 54 wasserdicht verschlossen.

In dem oben beschriebenen Ausführungsbeispiel ist nur ein einziger unten über einen Steg 18 verschlossener Schlitz 19 vorgesehen, in welchem die Rastnase 35 der Spreizmutter 7 geführt ist. In manchen Fällen reicht nur eine Rastnase 35 nicht als Verlierungssicherung aus, gemäss einer Weiterbildung der Erfindung kann es daher von Vorteil sein, an der Spreizmutter 7 zwei diametral gegenüberliegende Rastnasen 35 vorzusehen und an der Blechhülse zwei diese aufnehmende unten über einen Steg geschlossene Führungsschlitze auszubilden, in diesem Fall ist es zweckmässig, nicht nur drei Lappen 15, 16, 17 vorzusehen sondern am unteren Ende der Hülse vier entsprechende Lappen auszubilden und jeweils zwei davon durch einen Steg zu dem entsprechenden Führungsschlitz miteinander zu verbinden.

Bei der Befestigung von Fensterrahmen mit einem erfindungsgemässen Spreizdübel ist ein möglichst gutes optisches Aussehen der Befestigungsstelle wünschenswert. Eine Möglichkeit dafür ist das nachträgliche Einsetzen einer Abdeckkappe aus Kunststoff in die Kreuzschlitzvertiefung des Schraubenkopfes.

Gemäss einer Weiterbildung der Erfindung hat sich hierfür eine Abdeckkappe als besonders vorteilhaft erwiesen, die gemäss Fig. 10 und 11 geformt ist. Die dargestellte Kappe wird durch einen auf der Unterseite abstehenden Vorsprung 60 in der Kreuzschlitzvertiefung des Schraubenkopfes gehalten, der gemäss Fig. 10 im Querschnitt der Form der Kreuzschlitzvertiefung der Schraube entspricht, gegenüber dieser Kreuzschlitzvertiefung jedoch etwas Übermass besitzt. Dieser Vorsprung ist innen hohl und besitzt bis in die radial nach aussen vorspringenden Stege 61 verlaufende Schlitze 62, so dass der gesamte Vorsprung in sich radial federnd ist. Beim Aufsetzen der Kunststoff-Abdeckkappe auf den Schraubenkopf wird der mit etwas Übermass versehene innen hohle Vorsprung 60 etwas zusammengedrückt und damit selbsthemmend in der Kreuzschlitzvertiefung gehalten, ohne dass ein bei solchen Abdeckkappen bisher üblicher Haltestift vorgesehen ist, der eine zusätzliche Bohrung am Grund der Kreuzschlitzvertiefung benötigt. Um die Haltewirkung des Vorsprunges 60 in der Kreuzschlitzvertiefung noch zu verbessern, können am Aussenumfang dieses Vorsprungs noch zusätzliche Längsrippen 63 vorgesehen sein. Das innere Hohlprofil des Vorsprunges richtet sich nach der Aussenform des Vorsprungs, die wiederum gegeben ist durch die Form des jeweiligen Kreuzschlitzes. Das Innenprofil wird vorzugsweise so gewählt, dass der Vorsprung insgesamt über dem ganzen Umfang gleichmässige Wandstärke besitzt und damit von allen Seiten gleichmässig radial federnd ist. Bei Bedarf könnte vor dem Einsetzen der Kappe in den Hohlraum des Vorsprunges 60 noch ein Kleber eingegeben werden, der nach dem Einsetzen aushärtet und teilweise auch in den verbleibenden Raum der Kreuzschlitzvertiefung ausläuft und so einen sicheren Halt der Kappe im Kreuzschlitz gewährleistet.

Eine andere Möglichkeit zur Verbesserung des äusseren Aussehens des Schraubenkopfes besteht darin, den Schraubenkopf im Sinne der Fig. 5 nach Art einer Rosette auszuformen, wie sie als gesonderte Blechteile für Schrauben bekannt sind. Der Durchmesser des Schraubenkopfes wird vorzugsweise so gross gewählt, dass er den oberen Rand der Blechhülse 3 einschliesslich der dort vorgesehenen Krallen 9 überdeckt, also die gesamte Befestigungsstelle des Dübels durch die Rosette abgedeckt ist. Die Oberseite des Schraubenkopfes ist als runder Ringwulst ausgebildet und die Ränder der Kreuzschlitzvertiefung sind gegenüber dem oberen abgerundeten Rosettenteil axial etwas nach innen zurückgesetzt also tiefer liegend ausgebildet, so dass ein sich am Rand der Kreuzschlitzvertiefung bei der Montage gegebenenfalls ausbildender Grat gegenüber der Rosettenoberseite immer zurückgesetzt ist und keine Verletzungen verursachen kann. An der Unterseite des Rosettenkopfes kann gegebenenfalls noch ein flacher Senkwinkel ausgebildet sein, so dass der Rand der Rosette beim Anziehen der Schraube etwas in das Material des zu befestigenden Bauteiles eingedrückt wird und so das optische Aussehen der Befestigungsstelle verbessert wird.

**Patentansprüche**

1. Spreizdübel zum Befestigen eines Bauteils (1), insbesondere eines Kunststoff-Fensterrahmens, an einem Baukörper (2), bestehend aus einer geschlitzten Blechhülse (3) und einem eingesetzten Schraubenbolzen (4), dessen Kopf (5) mit dem oberen Hülsenrand zusammenwirkt und auf dessen Gewindeende (6) ein mit der unteren Spreizzone (8) der Blechhülse (3) zusammenwirkende Spreizmutter (7) aufgeschraubt ist, dadurch gekennzeichnet, daß am oberen mit dem Schraubenkopf (5) zusammenwirkenden Hülsenrand mehrere radial nach außen vorspringende, über den Hülsenumfang verteilte Krallen (9) in Form von Ausprägungen ausgebildet sind, deren Profil so gewählt ist, daß sie beim Anziehen des Schraubenbolzens (4) durch den Schraubenkopf (5) im zu befestigenden Bauteil (1) versenkt werden.

2. Dübel nach Anspruch 1, bei dem unterhalb des Hülsenrandes in einem etwa der Dicke des zu befestigenden Bauteils (1) entsprechenden Abstand radial nach aussen vorspringende Rastvorsprünge (10) ausgebildet sind, dadurch gekennzeichnet, dass die Krallen (9) radial etwa gleich hoch wie diese Rastvorsprünge (10) ausgebildet sind.

3. Dübel nach Anspruch 1 oder 2, dadurch gekennzeichnet, dass die Krallen (9) am Umfang der Hülse gegenüber den Rastvorsprüngen (10) winkelversetzt sind.

4. Dübel nach einem der vorhergehenden Ansprüche, dadurch gekennzeichnet, dass die Krallen (9) in Form von dreieckförmigen Profilausprägungen aus dem Blechmaterial der Hülse (3) ausgebildet sind.

5. Dübel nach Anspruch 4, dadurch gekennzeichnet, dass die auf der Hülseninnenseite ausgebildeten Prägesicken der Krallen (9) sich axial etwa bis zum Beginn der Rastvorsprünge (10) erstrecken.

6. Dübel nach einem der vorhergehenden Ansprüche, bei dem die Blechhülse (3) im oberen, mit dem Schraubenkopf (5) zusammenwirkenden Bereich mindestens zwei über den Hülsenumfang verteilte Längsschlitze (12, 26) aufweist, dadurch gekennzeichnet, dass die Längsschlitze (12, 26) am Hülsenrand durch einen Steg (11, 13, 14) geschlossen sind.

7. Dübel nach Anspruch 6, dessen Blechhülse (3) einen sich über die ganze Länge erstreckenden, durch die aneinanderstossenden Längsränder eines gewickelten Blechstreifens gebildeten Längsschlitz (26) aufweist, dadurch gekennzeichnet, dass der diesen Schlitz (26) verschliessende Steg durch an mindestens einem der Längsränder des Blechstreifens vorspringende Lappen (13, 14) gebildet ist.

8. Dübel nach Anspruch 6 oder 7, dadurch gekennzeichnet, dass die axiale Breite der Stege (11, 13, 14) etwa der Materialstärke des zu befestigenden Bauteils (1) entspricht.

9. Dübel nach einem der vorhergehenden Ansprüche, dadurch gekennzeichnet, daß der Außendurchmesser des Schraubenkopfes (5) größer als der durch die Krallen (9) gebildete Hülsenrand-Außendurchmesser gewählt ist.

10. Dübel nach einem der vorhergehenden Ansprüche, dadurch gekennzeichnet, dass die Rastvorsprünge schräge, aussen treppenförmige Ausprägungen (36, 37) sind.

11. Dübel nach Anspruch 10, dadurch gekennzeichnet, dass zwischen den oben am weitesten radial vorspringenden aussen treppenförmigen Rast-Ausprägungen (36) zusätzliche entgegengesetzt schräg ausgebildete, aussen ebenfalls treppenförmige Ausprägungen (37) ausgebildet sind (Figuren 6, 7 und 8).

12. Dübel nach einem der vorhergehenden Ansprüche 1 bis 11, bei dem die untere, der Spreizmutter (7) zugeordnete Spreizzone (8) mindestens drei durch Längsschlitze (19) gebildete Mantellappen (15, 16) aufweist, dadurch gekennzeichnet, dass mindestens zwei der Mantellappen (15, 16) am unteren Rand der Hülse (3) durch einen schmalen Steg (18) miteinander verbunden sind.

13. Dübel nach Anspruch 12, dadurch gekennzeichnet, dass der nicht durch einen Steg verbundene Mantellappen (17) axial länger ausgebildet ist als die durch einen Steg (18) miteinander verbundenen Mantellappen (15, 16).

14. Dübel nach Anspruch 12 oder 13, dadurch gekennzeichnet, dass der durch die über einen Steg (18) miteinander verbundenen Mantellappen (15, 16) gebildete Hülsenabschnitt mindestens doppelt so breit ist wie der einzelne Mantellappen (17).

15. Dübel nach einem der Ansprüche 12 bis 14, dadurch gekennzeichnet, dass die untere Spreizzone durch drei etwa gleich breite Mantellappen (15, 16, 17) gebildet ist und zwei dieser Lappen (15, 16) am unteren Rand durch einen Steg (18) miteinander verbunden sind.

16. Dübel nach einem der Ansprüche 12 bis 15, dadurch gekennzeichnet, dass der durch die miteinander verbundenen Mantellappen (15, 16) gebildete Hülsenabschnitt und/oder der einzelne Mantellappen (17) am unteren Rand (bei 21 und 22) dreieckförmig spitz zugeschnitten ist.

17. Dübel nach einem der vorhergehenden Ansprüche 12 bis 16, dadurch gekennzeichnet, dass der durch einen Steg (18) geschlossene Schlitz (19) der unteren Spreizzone (8) axial länger ist als der nicht geschlossene Schlitz (20).

18. Dübel nach einem der vorhergehenden Ansprüche 12 bis 17, dadurch gekennzeichnet, dass die Mantellappen (15, 16, 17) aussen mit zusätzlichen Verankerungskrallen (23, 24) versehen sind.

19. Dübel nach Anspruch 18, dadurch gekennzeichnet, dass die Krallen durch aus dem Blech ausgeprägte Längs- und Quersicken (23, 24) gebildet sind.

20. Dübel nach einem der vorhergehenden Ansprüche, bei dem die Spreizmutter (7) auf ihrer konischen Aussenseite einen in einem der Längsschlitze geführten Führungssteg (30) aufweist, dadurch gekennzeichnet, dass an der konischen Aussenseite der Spreizmutter (7) zusätzliche der Umfangsverteilung der Mantellappen (15, 16, 17) entsprechend verteilte Nocken (31, 32, 33, 34) ausgebildet sind.

21. Dübel nach Anspruch 20, dadurch gekennzeichnet, dass die Nocken (31, 32, 33, 34) so geformt sind, dass sie für die unterschiedlich langen Mantellappen (15, 16, 17) als Zentrierung wirken.

22. Dübel nach Anspruch 20 oder 21, dadurch gekennzeichnet, dass der dem längeren Mantellappen (17) zuordnete Nocken (34) auf der Mutteraussenseite axial tiefer angebracht ist als die den kürzeren Mantellappen (15, 16) zugeordneten Nocken (31, 32, 33).

23. Dübel nach einem der Ansprüche 20 bis 22, dadurch gekennzeichnet, dass auch dem die Mantellappen (15, 16) verbindenden Steg (18) ein entsprechender Nocken (32) zugeordnet ist.

24. Dübel nach Anspruch 23, dadurch gekennzeichnet, dass oberhalb dieses Nocken (32) eine in den über dem Steg (18) beginnenden Schlitz (19) passende Verlierungssicherungsrastnase (35) ausgebildet ist.

25. Dübel nach einem der vorhergehenden Ansprüche, dadurch gekennzeichnet, dass unterhalb der Rastvorsprünge (10, 36) am Hülsenumfang zusätzliche Verdrehungssicherungskrallen (25) ausgebildet sind.

26. Dübel nach einem der vorhergehenden Ansprüche, dadurch gekennzeichnet, dass die Spreizzone der Blechhülse vier Lappen aufweist, jeweils zwei davon durch einen Steg (18) miteinander verbunden sind und an der Spreizmutter (7) zwei in die über die Stege (18) gebildeten Schlitze (19) passende Rastnasen (35) ausgebildet sind.

27. Dübel nach einem der vorhergehenden Ansprüche, dadurch gekennzeichnet, dass zwischen Schraubenkopf (56) und oberem Rand der Blechhülse (3) eine Verlängerungshülse (57) insbesondere aus Kunststoff vorgesehen ist.

28. Dübel nach Anspruch 27, dadurch gekennzeichnet, dass die Verlängerungshülse (57) am oberen Rand der Blechhülse (3) gehalten ist und die radial vorspringenden Krallen (9) des Blechhülsenrandes umgreifen.

29. Dübel nach einem der vorhergehenden Ansprüche, dadurch gekennzeichnet, dass die Oberseite des Schraubenkopfes (5) nach Art einer Rosette geformt ist (Fig. 5).

30. Dübel nach Anspruch 29, dadurch gekennzeichnet, dass die Ränder der auf der Kopfoberseite ausgebildeten Kreuzschlitzvertiefung gegenüber dem oberen abgerundeten Randwulst der Rosette tiefer liegend ausgebildet sind.

31. Dübel nach Anspruch 29 oder 30, dadurch gekennzeichnet, dass der Aussendurchmesser der Rosette grösser als der durch die Krallen (9) gebildete Hülsenrand-Aussendurchmesser gewählt ist.

32. Dübel nach einem der vorhergehenden Ansprüche, dadurch gekennzeichnet, dass auf dem Kopf des Schraubenbolzens eine Abdeckkappe (59) aus Kunststoff aufgesetzt ist, die auf ihrer Unterseite einen im Profil geringfügig grösser als der Querschnitt der Kreuzschlitzvertiefung des Schraubenkopfes ausgebildeten Vorsprung (60) aufweist, der innen hohl ist.

33. Dübel nach Anspruch 32, dadurch gekennzeichnet, dass auf der Aussenseite des federnden Vorsprunges (60) die Haltekraft verbessernde Rippen (63) ausgebildet sind.

34. Dübel nach einem der vorhergehenden Ansprüche, dadurch gekennzeichnet, daß die Unterseite des Schraubenkopfes (5) eine beim Anziehen des Schraubenbolzens den oberen Hülsenrand aufnehmende ringnutartige Aussparung aufweist.

35. Dübel nach Anspruch 34, dadurch gekennzeichnet, daß die ringnutartige Aussparung von einem sich in die Oberfläche des zu befestigenden Bauteiles (1) eindrückenden umlaufenden Ring begrenzt ist, der einen größeren Durchmesser als der äußere Hülsenrand aufweist.

**Claims**

1. An expansion dowel for mounting a compound unit (1), especially a plastic window frame, on a building unit (2), said dowel comprising a slotted sheet-metal sleeve (3) and a bolt (4) inserted therein, the head (5) of said bolt cooperating with the top edge of the sleeve and the threaded end portion of said bolt having an expansion nut (7) screwed thereon for cooperation with the bottom expansion zone (8) of said sheet-metal sleeve (3), characterised in that the top edge of the sleeve cooperating with the bolt head (5) has formed thereon a plurality of circumferentially distributed, radially outwardly protruding spikes (9) configured as embossed portions, the profile of said spikes being selected such that, when the bolt (4) is tightened, they will be embedded by the bolt head (5) in the compound unit (1) to be mounted.

2. Dowel as claimed in claim 1, in which below the sleeve edge there are formed radially outwardly projecting locking protrusions (10) at a spacing which approximately corresponds to the thickness of the compound unit (1) to be mounted, characterised in that said spikes (9) are configured to have approximately the same height as said locking protrusions (10).

3. Dowel as claimed in claim 1 or claim 2, characterised in that the spikes (9) on the circumference of the sleeve are angularly offset relative to the locking protrusions (10).

4. Dowel as claimed in any one of the preceding claims, characterised in that the spikes (9) are configured as triangular embossed profiles from the sheet-metal material of the sleeve (3).

5. Dowel as claimed in claim 4, characterised in that the embossing creases of the spikes (9) formed on the inside of the sleeve extend axially approximately to the start of the locking protrusions (10).

6. Dowel as claimed in any one of the preceding claims, in which the sheet-metal sleeve (3) in its upper portion cooperating with the bolt head (5) includes at least two longitudinal slots (12, 26) distributed about the sleeve circumference, characterised in that said longitudinal slots (12, 26) are closed at the sleeve edge by means of a web (11, 13, 14).

7. Dowel as claimed in claim 6 the sheet-metal sleeve (3) of which comprises a longitudinal slot (26) which extends across the entire length and is formed by the abutting longitudinal edges of a wound sheet-metal strip, characterised in that the web which closes said slot (26) is formed by lugs (13, 14) which project from at least one of the longitudinal edges of the sheet-metal strip.

8. Dowel as claimed in claim 6 or claim 7, characterised in that the axial width of the webs (11, 13, 14) corresponds approximately to the thickness of the material of the compound unit (1) to be mounted.

9. Dowel as claimed in any one of the preceding claims, characterised in that the outer diameter of the bolt head (5) is larger than the outer diameter of the sleeve edge as defined by the spikes (9).

10. Dowel as claimed in any one of the preceding claims, characterised in that the locking protrusions are inclined, externally stepped embossed members (36, 37).

11. Dowel as claimed in claim 10, characterised in that between the externally stepped embossed locking members (36) whose upper portions project radially farthest, there are provided additional, oppositely inclined embossed members (37) which are likewise stepped externally (Figs. 6, 7 and 8).

12. Dowel as claimed in any one of the preceding claims 1 to 11, in which the bottom expansion zone (8) facing the expansion nut (7) is provided with at least three body lugs (15, 16) constituted by longitudinal slots (19), characterised in that at least two of said body lugs (15, 16) are interconnected at the lower edge of the sleeve (3) by a narrow web (18).

13. Dowel as claimed in claim 12, characterised in that the body lug (17) which is not connected by a web is of greater axial length than the body lugs (15, 16) which are interconnected through a web (18).

14. Dowel as claimed in claim 12 or claim 13, characterised in that the sleeve portion which is constituted by the body lugs (15, 16) interconnected through a web (18) has at least twice the width as the single body lug (17).

15. Dowel as claimed in any one of the claims 12 to 14, characterised in that the bottom expansion zone is formed by three body lugs (15, 16, 17) of approximately equal width and that two of said lugs (15, 16) are interconnected at the upper edge thereof by a web (18).

16. Dowel as claimed in any one of the claims 12 to 15, characterised in that the sleeve portion defined by the interconnected body lugs (15, 16) and/or the single body lug (17) is of triangular pointed configuration at the bottom edge (at 21 and 22).

17. Dowel as claimed in any one of the preceding claims 12 to 16, characterised in that the slot (19) of the bottom expansion zone (8), which slot is closed by a web (18), has greater axial length than the unclosed slot (20).

18. Dowel as claimed in any one of the preceding claims 12 to 17, characterised in that the body lugs (15, 16, 17) are externally provided with additional anchoring spikes (23, 24).

19. Dowel as claimed in claim 18, characterised in that the spikes are formed from longitudinal and transverse beads (23, 23) embossed from the sheet-metal material.

20. Dowel as claimed in any one of the preceding claims, in which the expansion nut (7) is provided on its tapered outer surface with a guide rib (30) which extends in one of the longitudinal slots, characterised in that the tapered outer surface of the expansion nut (17) has additional cam elements (31, 32, 33, 34) formed thereon which correspond to the circumferential distribution of the body lugs (15, 16, 17).

21. Dowel as claimed in claim 20, characterised in that the shape of the cam elements (31, 32, 33, 34) is designed so that the cam elements act as centring means for the body lugs (15, 16, 17) of different lengths.

22. Dowel as claimed in claim 20 or claim 21, characterised in that the cam element (34) associated with the longer body lug (17) is provided on the outer surface of the nut at a greater axial depth than the cam elements (31, 32, 33) associated with the shorter body lugs (15, 16).

23. Dowel as claimed in any one of the claims 20 to 22, characterised in that the web (18) which interconnects the body lugs (15, 16) also has a corresponding cam element (32) associated therewith.

24. Dowel as claimed in claim 23, characterised in that above said cam element (32) there is formed an anti-escape detent (35) which fits in the slot (19) commencing above the web (18).

25. Dowel as claimed in any one of the preceding claims, characterised in that additional anti-torsion spikes (25) are formed on the sleeve circumference below the locking protrusions (10, 36).

26. Dowel as claimed in any one of the preceding claims, characterised in that the expansion zone of the sheet-metal sleeve comprises four lugs, that two respective ones of said lugs are interconnected by a web (18), and that two detents (35) which fit into the slots (19) formed through the webs (18) are provided on said expansion nut (7).

27. Dowel as claimed in any one of the preceding claims, characterised in that between bolt head (56) and top edge of the sheet-metal sleeve (3) there is provided an extension sleeve (57), especially one made of plastic material.

28. Dowel as claimed in claim 27, characterised in that the extension sleeve (57) is retained on the top edge of the sheet-metal sleeve (3) and overlaps the radially projecting spikes (9).

29. Dowel as claimed in any one of the preceding claims, characterised in that the upper surface of the bolt head (5) is shaped like a rosette (Fig. 5).

30. Dowel as claimed in claim 29, characterised in that the edges of the cross-slot recess formed on the top surface of the head are configured to be disposed deeper than the upper rounded bead of the rosette.

31. Dowel as claimed in claim 29 or claim 30, characterised in that the outer diameter of the rosette is selected to be greater than the outer diameter of the sleeve edge as defined by the spikes (9).

32. Dowel as claimed in any one of the preceding claims, characterised in that the head of the bolt has a cap (59) of plastic material provided thereon, said cap having an interiorly hollow projection (60) provided on its lower surface, the profile of said projection being slightly larger than the cross-section of the cross-slot recess of the bolt head.

33. Dowel as claimed in claim 32, characterised in that the outer side of the resilient projection (60) is formed with ribs (63) for improving the retaining power.

34. Dowel as claimed in any one of the preceding claims, characterised in that the underside of the bolt head (5) is provided with a recess configured as an annular groove for accommodating the upper sleeve edge when the bolt is tightened.

35. Dowel as claimed in claim 34, characterised in that the annular groove-like recess is defined by a continuous ring which is pressed into the surface of the compound unit (1) to be mounted and which has a greater diameter than the outer sleeve edge.

**Revendications**

1. Cheville expansible pour fixer une pièce de construction (1) notamment un châssis de fenêtre en matière synthétique sur un élément construit (2), cheville comprenant une douille en tôle (3) fendue recevant un goujon fileté (4) dont la tête (5) coopère avec le bord supérieur de la douille, et un écrou d'écartement (7) vissé sur l'extrémité filetée (6) coopérant avec la zone d'expansion (8) inférieure de la douille en tôle (3), caractérisée en ce que le bord supérieur de la douille coopérant avec la tête de vis (5) comporte plusieurs griffes (9) radialement en saillie et réparties à la périphérie de la douille, griffes en forme de parties matricées dont le profil est choisi de façon qu'au serrage du goujon fileté (4) par la tête de vis (5), elles s'accrochent dans la pièce (1) à fixer.

2. Cheville selon la revendication 1 comportant des saillies d'accrochage (10) dirigées radialement vers l'extérieur en dessous du bord de la douille à une distance correspondant sensiblement à l'épaisseur de la pièce (1) à fixer, caractérisée en ce que les griffes (9) sont radialement sensiblement aussi longues que les saillies d'accrochage (10).

3. Cheville selon l'une quelconque des revendications 1 et 2, caractérisée en ce que les griffes (9) sont décalées angulairement par rapport aux saillies d'accrochage (10) à la périphérie de la douille.

4. Cheville selon l'une quelconque des revendications précédentes, caractérisée en ce que les griffes (9) ont la forme de parties matricées, profilées, triangulaires réalisées dans la tôle de la douille (3).

5. Cheville selon la revendication 4, caractérisée en ce que les nervures matricées des griffes (9), réalisées sur le côté intérieur de la douille s'étendent axialement sensiblement jusqu'au commencement des saillies d'accrochage (10).

6. Cheville selon l'une quelconque des revendications précédentes, dont la douille en tôle (3) comporte dans sa zone supérieure coopérant avec la tête de vis (5) au moins deux fentes longitudinales (12, 26) réparties à la périphérie de la douille, caractérisée en ce que les fentes longitudinales (12, 26) sont fermées au niveau du bord de la douille par une entretoise (11, 13, 14).

7. Cheville selon la revendication 6 dont la douille en tôle (3) comporte une fente longitudinale (26) s'étendant sur toute la longueur en étant formée par les bords adjacents d'une bande de tôle enroulée, caractérisée en ce que l'entretoise qui ferme cette fente (26) est formée par au moins une patte (13, 14) en saillie par rapport aux bords longitudinaux de la bande de tôle.

8. Cheville selon la revendication 6 ou 7, caractérisée en ce que la largeur axiale des entretoises (11, 13, 14) correspond sensiblement à l'épaisseur de la matière de la pièce (1) à fixer.

9. Cheville selon l'une quelconque des revendications précédentes, caractérisée en ce que le diamètre extérieur de la tête de vis (5) est supérieur au diamètre extérieur du bord de la douille défini par les griffes (9).

10. Cheville selon l'une quelconque des revendications précédentes, caractérisée en ce que les parties en saillie sont des parties matricées (36, 37) inclinées et ayant extérieurement une forme de gradins.

11. Cheville selon la revendication 10, caractérisée en ce qu'aux parties matricées d'accrochage (36) en forme de gradins, venant radialement en saillie vers le haut, sont associées des parties matricées (37) également en forme de gradins, d'inclinaisons opposées (37 (figures 6, 7 et 8).

12. Cheville selon l'une des revendications précédentes 1 à 11 dans laquelle la zone d'expansion (8) se trouvant sous l'écrou d'écartement (7) comporte au moins trois pattes-enveloppes (15, 16) formées par les fentes longitudinales (19), caractérisée en ce qu'au moins deux des pattes-enveloppes (15, 16) sont reliées entre elles aux bords inférieurs de la douille (3) par une entretoise étroite (18).

13. Cheville selon la revendication 12, caractérisée en ce que la patte-enveloppe (17) non reliée par une entretoise a une longueur axiale supérieure à celle des pattes-enveloppes (15, 13) reliées par une entretoise (18).

14. Cheville selon les revendications 12 et 13, caractérisée en ce que le segment de douille formé par les pattes-enveloppes (15, 16) reliées par une entretoise (18) est au moins deux fois aussi large que les pattes-enveloppes séparées (17).

15. Cheville selon l'une des revendications 12 à 14, caractérisée en ce que la zone d'écartement inférieure est formée par trois pattes-enveloppes (15, 16, 17) de largeur sensiblement égale et deux de ces pattes (15, 16) sont reliées entre elles à un bord inférieur par une entretoise (18).

16. Cheville selon l'une des revendications 12 à 15, caractérisée en ce que le segment de douille formé par les pattes-enveloppes (15, 16) reliées entre elles et/ou les pattes-enveloppes (17) séparées, ont leur bord inférieur coupé en pointe triangulaire (en 21 et 22).

17. Cheville selon l'une des revendications précédentes 12 à 16, caractérisée en ce que la fente (19) fermée par une entretoise (18) de la zone d'écartement inférieure (8) est plus longue dans la direction axiale que la fente (20) non fermée.

18. Cheville selon l'une des revendications précédentes 12 à 17, caractérisée en ce que les pattes-enveloppes (15, 16, 17) sont munies extérieurement de griffes d'ancrage supplémentaires (23, 24).

19. Cheville selon la revendication 18, caractérisée en ce que les griffes sont formées par des nervures longitudinales et transversales (23, 24) matricées dans la tôle.

20. Cheville selon l'une des revendications précédentes dans laquelle l'écrou d'écartement (7) comporte sur son côté extérieur conique une entretoise de guidage (30) guidée dans l'une des fentes longitudinales, caractérisée en ce que sur le côté extérieur conique de l'écrou d'écartement (7), on a formé des cames supplémentaires (31, 32, 33, 34) réparties de façon correspondante à la répartition périphérique des volets-enveloppes (15, 16, 17).

21. Cheville selon la revendication 20, caractérisée en ce que les cames (31, 32, 33, 34) sont formées pour fonctionner comme moyens de centrage pour les volets-enveloppes (15, 16, 17) de longueurs différentes.

22. Cheville selon la revendication 20 ou 21, caractérisée en ce que la came (34) associée au volet-enveloppe (17) le plus long est située sur le côté extérieur de l'écrou, axialement plus bas que les cames (31, 32, 33) associées aux volets-enveloppes (15, 16) plus courts.

23. Cheville selon l'une des revendications 20 à 22, caractérisée en ce qu'une came (32) correspondante est également associée à l'entretoise (18) qui relie les volets-enveloppes (15, 16).

24. Cheville selon la revendication 23, caractérisée en ce qu'un bec d'accrochage de protection contre la perte (35) adapté à la fente (19) qui commence au-dessus de l'entretoise (18) est prévu au-dessus de la came (32).

25. Cheville selon l'une quelconque des revendications précédentes, caractérisée en ce qu'en dessous des parties en saillie d'accrochage (10, 36), la périphérie de la douille comporte des griffes de blocage en rotation (25) complémentaires.

26. Cheville selon l'une quelconque des revendications précédentes, caractérisée en ce que la zone d'expansion de la douille en tôle comporte quatre volets et chaque fois deux de ces volets sont reliés par une entretoise (18) et l'écrou d'écartement (7) comporte deux becs d'accrochage (35) susceptibles de se loger dans les fentes (19) au-dessus de l'entretoise (18).

27. Cheville selon quelconque des revendications précédentes, caractérisée en ce qu'elle comporte une douille de prolongement (57) notamment en matière synthétique entre la tête de vis (56) et le bord supérieur de la douille en tôle (3).

28. Cheville selon la revendication 27, caractérisée en ce que la douille de prolongement (57) est maintenue au bord supérieur de la douille en tôle (3) et entoure les griffes (9) radialement en saillie du bord de la douille en tôle.

29. Cheville selon l'une quelconque des revendications précédentes, caractérisée en ce que le côté supérieur de la tête de vis (5) est en forme de rosace (figure 5).

30. Cheville selon la revendication 29, caractérisée en ce que les bords des cavités cruciformes réalisées sur le côté supérieur de la tête sont en contre-bas par rapport aux bourrelets périphériques supérieurs arrondis de la rosace.

31. Cheville selon la revendication 29 ou 30, caractérisée en ce que le diamètre extérieur de la rosace est supérieur au diamètre extérieur du bord de la douille comme défini par les griffes (9).

32. Cheville selon l'une quelconque des revendications précédentes, caractérisée en ce qu'un capuchon (59) en matière synthétique est placé sur la tête du goujon fileté, capuchon dont la face inférieure présente une partie en saillie (60) dont le profil est légèrement supérieur à la section de la cavité cruciforme de la tête de vis.

33. Cheville selon la revendication 32, caractérisée par des nervures (3) améliorant l'accrochage sur le côté extérieur de la partie en saillie (60) élastique.

34. Cheville selon l'une quelconque des revendications précédentes, caractérisée en ce que le côté inférieur de la tête de vis (5) comporte une cavité en forme de rainure annulaire recevant le bord de la douille lors du serrage du goujon fileté.

35. Cheville selon la revendication 34, caractérisée en ce que la cavité en forme de rainure annulaire est délimitée par un anneau périphérique qui s'enfonce dans la face supérieure de la pièce (1) à fixer, anneau dont le diamètre est supérieur à celui du bord extérieur de la douille.

**0 155 484**

Fig 1

Fig 2

Fig 5

Fig 3

Fig 4

Fig 6

Fig 7    Fig 8

Fig 9

4

Fig 10

Fig 11